# EUROPÄISCHE PATENTSCHRIFT

(11) **EP 0 377 062 B1**
(45) Veröffentlichungstag und Bekanntmachung des Hinweises auf die Patenterteilung: **04.08.1993**
(21) Anmeldenummer: 89100078.8
(22) Anmeldetag: 04.01.1989
(51) Int. Cl.: C03C 8/14, C03C 8/18

(54) **Email für mit Silberleitbahnen versehene Glasscheiben**
Enamel for glass panes provided with silver electric paths
Email pour vitres pourvues de bandes conductrices en argent

(43) Veröffentlichungstag der Anmeldung: 11.07.1990
(73) Patentinhaber: Degussa Aktiengesellschaft, 60311 Frankfurt (DE)
(72) Erfinder: Chaumonot, Josselin, FR-87100 Limoges (FR); Roche, Guy, FR-87170 Isle (FR)

(56) Entgegenhaltungen:
- EP-A- 0 294 503
- CHEMICAL ABSTRACTS, Band 107, Nr. 2, Juli 1987, Seite 287, Zusammenfassung Nr. 11812v, Columbus, Ohio, US
- CHEMICAL ABSTRACTS, Band 81, Nr. 12, 23. September 1974, Seite 288, Zusammenfassung Nr. 67798g, Columbus, Ohio, US

## Beschreibung

Die Erfindung betrifft ein Email für mit Silberleitbahnen versehenen Glasscheiben, bestehend aus einer Glasfritte und einem oder mehreren Pigmenten in Form von Schwermetalloxiden oder -sulfiden.

Emailartige Überzüge bzw. Dekorschichten werden in zunehmendem Maße auf Autoglasscheiben aufgebracht, beispielweise in Form von rahmenartigen undurchsichtigen Überzügen entlang dem Rand von Autoscheiben, die nach dem Verfahren der Direktverklebung in die Autokarosserie eingesetzt werden. Diese Emailüberzüge verhindern die Sicht durch die Glasscheibe auf die Klebeverbindung, dienen zur Erhöhung der Adhäsion des Klebers und zum Schutz des Klebers vor schädlichen UV Strahlen. Auch für andere Anwendungszwecke werden undurchsichtige Farbemailüberzüge als zusammenhängende Schicht oder in unterbrochener Form auf Glasscheiben aufgebracht, um dekorative Effekte zu erzielen. Die für diesen Zweck üblichen emailartigen Überzüge bestehen aus einer aufgeschmolzenen Glasphase, in der Farbpigmente eingelagert sind.

Es ist bekannt, daß mit Hilfe von Silberpasten, die beispielsweise mittels Siebdruck aufgebracht und bei der Wärmebehandlung des Glases eingebrannt werden, auf Kraftfahrzeugscheiben Leiterkreise oder Radioantennen hergestellt werden können. Dort, wo Silber in emallierten Zonen aufgebracht werden soll, wird es im allgemeinen auf das Email oder zwischen zwei Emailschichten aufgebracht, um es dem Blick des Beobachters zu entziehen, der von außen, d.h. von der nicht emaillierten Seite aus, durch die Scheibe blickt.

Die für die Kraftfahrzeugscheiben verwendeten Emails bestehen im allgemeinen aus einer Glasfritte oder einem Gemisch schmelzbarer Fritten, sowie aus Farbpigmenten, welche ihnen die angestrebte Färbung und das Deckvermögen verleihen.

Die als Grundlage für die Emails verwendeten Glasfritten besitzen im allgemeinen die nachstehende Zusammensetzung (Gew.%):

| | |
|---|---|
| PbO | 48 - 60 |
| SiO₂ | 28 - 35 |
| B₂O₃ | 2 - 6 |
| Na₂O | 1 - 5 |
| TiO₂ | 1 - 4 |
| ZrO₂ | 1 - 3 |
| Al₂O₃ | 0 - 3 |
| CdO | 0 - 3 |
| CaO | 0 - 2 |
| ZnO | 0 - 1 |
| K₂O | 0 - 1. |

Als Pigmente werden für schwarze Farbtöne die Oxide von Chrom und Kupfer oder die Oxide von Chrom, Eisen, Nickel und/oder Mangan verwendet. Für graue Farbtöne benutzt man neben den genannten Schwarzpigmenten auch andere Pigmente wie Zinn- oder Titanoxid, für blaue Farbtöne Oxide von Kobalt, Aluminium, Silizium und Zink, für gelbe Blei-, Antimon- oder Kadmiumsulfide.

Es ist bekannt, daß Silberverbindungen, die auf Glas bzw. Emails aufgebracht werden, diesem aufgrund von Transparenzeffekten eine gelbliche bis braune Färbung verleihen, die durch die Diffusion der Silberionen in das Glas bedingt ist.

Wenn man daher Silberpasten auf die Emails für Glas aufbringt, so zeigt das Glas in der Durchsicht eine von Gelb bis Braun reichende Färbung, die durch die Emailschicht nur unzureichend überdeckt wird.

Um dieses Phänomen, welches das Aussehen des emaillierten Glases beeinträchtigt, zu vermeiden, hat man versucht, die Silberschicht möglichst weitgehend zu maskieren, und zwar durch Behandeln des Emails und des Silbers, doch waren die Ergebnisse im allgemeinen nicht befriedigend.

Aus der EP-A 0 362 136 sind Emailzusammensetzungen bekannt, welche außer der Glasfritte und gegebenenfalls Pigmenten mindestens ein Metall aus der Reihe Cr, Co, Cu, Mn, Ni, rostfreiem Stahl, Si, Sn, Ti, W, Te und Chromcarbid enthalten. Diese Emails dienen zur Beschichtung von Glasscheiben, wie Autoscheiben, und erlauben die Verformung der Scheiben ohne Verklebung mit der Gußform.

Die EP-A 0 323 349 lehrt eine mehrschichtige Emailbeschichtung für Kochgeschirr. Die zweite Emailschicht enthält neben einer Glasfritte und gegebenenfalls Pigmenten als obligatorische Bestandteile wärmeleitfähige blättchenförmige Partikel, Graphit und Glaskugeln, wobei letztere wesentlicher Bestandteil des Emails sind.

Aus der EP-A 0 294 503 ist die Verwendung einer edelmetallhaltigen Paste zur Herstellung von Bräunungsgeschirr für Mikrowellenöfen bekannt. Wesentlicher Bestandteil der Paste ist außer einem Bindemittel und einer Glasfritte Rutheniumoxid; die Paste kann aber zusätzlich auch Silber enthalten.

Es war daher Aufgabe der vorliegenden Erfindung, ein Email für mit Silberleitbahnen versehenen Glasscheiben zu entwickeln, bestehend aus einer Glasfritte, einem oder mehreren Pigmenten in Form von Schwermetalloxiden oder -sulfiden und zusätzlich Zusatzstoffen in elementarer Form, das eine verbesserte Opazität gegen Silberschichten aufweist.

Diese Aufgabe wird erfindungsgemäß dadurch gelöst, daß das Email aus 60 bis 89,9 Gew.-% Glasfritte und 1 bis 30 Gew.-% Pigmenten und 0,1 bis 10 Gew.-% Zusatzstoffen aus der Reihe Bor, Kohlenstoff, Blei und/oder Silber besteht.

Bewährt haben sich auch Gemische dieser Zusatzstoffe, speziell Silber und Bor.

Das aus feingemahlenen Glasfritten, feingemahlenen Pigmenten und feingemahlenen Zusatzstoffen bestehende Email wird fein zerrieben und gemischt, um eine homogene Masse zu erhalten.

Dann wird mit einem geeigneten Medium eine Raste hergestellt, die mittels Siebdruck auf Flachglas aufgebracht wird, dessen Dicke zwischen etwa 2 und 8 mm liegen kann. Die Viskosität der Emailpaste sollte etwa 250 poise betragen, die Dicke der aufgebrachten Schicht 10 bis 20 µm.

Nach dem Trocknen des Emails wird darauf eine 5 bis 10 µm starke Silberschicht unter Verwendung bekannter Silberpasten aufgedruckt. Anschließend findet eine Wärmebehandlung statt, die je nach Glasart und Glas-stärke zwischen 580 und 750° C während 2 bis 20 Minuten durchgeführt wird.

Beim Vergleich mit konventionellen Glasscheibenemails zeigen die erfindungsgemäßen Emails eine stärkere Oberflächenmattierung. Besonders aber werden die Farbschwankungen zwischen den silberbedeckten und silberfreien Bereichen der Emailschichten nahezu vollständig eleminiert, d.h. die Opazität für Silber wird durch die erfindungsgemäße Emailzusammensetzung ganz wesentlich verbessert. Dabei werden die elektrischen Eigenschaften der Silberleitbahnen nicht verändert, auch die Lötbarkeit wird nicht beeinträchtigt.

### Beispiel

Mit folgendem Email wurde eine Autoscheibenbeschichtung hergestellt und anschließend mit Silberleitbahnen versehen:

Zusammensetzung (Gew.-%) eines erfindungsgemäßen schwarzen Emails:

| | |
|---|---|
| PbO | 40,6 |
| SiO₂ | 26,7 |
| Cr₂O₃ | 12,35 |
| CuO | 6,65 |
| B₂O₃ | 3,2 |
| Na₂O | 2,95 |
| TiO₂ | 2 |
| ZrO₂ | 1,9 |
| Al₂O₃ | 1,1 |
| Ag₂O | 1,05 |
| ZnO | 0,6 |
| CaO | 0,5 |
| K₂O | 0,4 |

Zur Herstellung werden 80 Gew.-% einer Glasfritte mit der Teilchengröße 1 bis 20 µm mit 19 Gew.-% eines Schwarzpigments (Kupfer-Chromoxid), Teilchengröße 1 bis 20 µm, und 1 Gew.-% Silberpulver, Teilchengröße 1 bis 20 µm gemischt und fein zerrieben. Das Email besitzt einen linearen Wärmeausdehnungskoeffizienten von 88 ^{.} 10⁻⁷ °C⁻¹ und einen Erweichungspunkt von 480°C.
Die Einbrenntemperatur sollte zwischen 630 und 680 °C liegen.

Das Email kann mittels Siebdruck auf Glasscheiben aufgebracht und bei 630 bis 680 °C eingebrannt werden. Silber verleiht dem Email auf Klarglas einen schwarzen Farbton mit braunem Stich, begünstigt jedoch auf Grünglas die Blaufärbung des Emails. Bor liefert auf Klarglas Farbtöne von Schwarz bis Grauschwarz.

## Patentansprüche (Patentansprüche für folgende(n) Vertragsstaat(en): AT, BE, CH, DE, FR, GB, IT, LI, NL, SE)

1. Email für mit Silberleitbahnen versehenen Glasscheiben, bestehend aus einer Glasfritte, einem oder mehreren Pigmenten in Form von Schwermetalloxiden und/oder -sulfiden und zusätzlich Zusatzstoffen in elementarer Form,
dadurch gekennzeichnet,
daß es aus 60 bis 89,9 Gew.-% Glasfritte, 1 bis 30 Gew.-% Pigmenten und 0,1 bis 10 Gew.-% Zusatzstoffen aus der Reihe Bor, Blei und/oder Silber besteht.

## Patentansprüche (Patentansprüche für folgende(n) Vertragsstaat(en): ES)

1. Verfahren zur Herstellung von Emails für mit Silberleitbahnen versehenen Glasscheiben durch Homogenisieren eines Gemischs aus einer Glasfritte, einem oder mehreren Pigmenten in Form von Schwermetalloxiden und/oder -sulfiden und zusätzlich Zusatzstoffen in elementarer Form,
dadurch gekennzeichnet,
daß das Gemisch aus 60 bis 89,9 Gew.-% Glasfritte, 1 bis 30 Gew.-% Pigmenten und 0,1 bis 10 Gew.-% Zusatzstoffen aus der Reihe Bor, Blei und/oder Silber besteht.

## Claims (Claims for the following Contracting State(s): AT, BE, CH, DE, FR, GB, IT, LI, NL, SE)

1. Enamel for glass panes provided with silver conductor tracks, comprising a glass frit, one or more pigments in the form of heavy metal oxides and/or heavy metal sulphides and additionally additives in elemental form,
characterised in that it comprises 60 to 89.9 wt-% glass frit, 1 to 30 wt-% pigments and 0.1 to 10 wt-% additives taken from the series boron, lead and/or silver.

## Claims (Claims for the following Contracting State(s): ES)

1. Process for the preparation of enamels for glass panes provided with silver conductor tracks, by homogenising a mixture of a glass frit, one or more pigments in the form of heavy metal oxides and/or heavy metal sulphides and additionally additives in elemental form,
characterised in that the mixture comprises 60 to 89.9 wt-% glass frit, 1 to 30 wt-% pigments and 0.1 to 10 wt-% additives taken from the series boron, lead and/or silver.

## Revendications (Revendications pour l'(les) Etat(s) contractant(s) suivant(s): AT, BE, CH, DE, FR, GB, IT, LI, NL, SE)

1. Email pour vitres munies de bandes conductrices argentées, constitué d'un verre fritté, d'un ou plusieurs pigments sous formes d'oxydes et/ou sulfures de métaux lourds et en outre d'additifs sous forme d'éléments, caractérisé en ce qu'il est constitué de 60 à 89,9 % en poids de verre fritté, 1 à 30 % en poids de pigments et 0,1 à 10 % en poids d'additifs choisis parmi le bore, le plomb et/ou l'argent.

## Revendications (Revendications pour l'(les) Etat(s) contractant(s) suivant(s): ES)

1. Procédé pour la préparation d'émaux pour vitres munies de bandes conductrices argentées, par homogénéisation d'un mélange composé de verre fritté, d'un ou plusieurs pigments sous forme d'oxydes et/ou de sulfures de métaux lourds et en outre d'additifs sous forme d'éléments, caractérisé en ce que le mélange est constitué de 60 à 89,9 % en poids de verre fritté, 1 à 30 % en poids de pigments et 0,1 à 10 % en poids d'additifs choisis parmi le bore, le plomb et/ou l'argent.
